(19) Europäisches Patentamt
European Patent Office
Office européen des brevets

(11) **EP 3 216 115 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(21) Anmeldenummer: **16700056.1**

(22) Anmeldetag: **06.01.2016**

(51) Int Cl.:
*H02K 9/14* *(2006.01)*    *H02K 9/08* *(2006.01)*
*H02K 9/10* *(2006.01)*

(86) Internationale Anmeldenummer:
**PCT/EP2016/050104**

(87) Internationale Veröffentlichungsnummer:
**WO 2016/120026 (04.08.2016 Gazette 2016/31)**

(54) **VERFAHREN ZUM KÜHLEN EINES GENERATORS**

METHOD FOR COOLING A GENERATOR

PROCÉDÉ DE REFROIDISSEMENT D'UN GÉNÉRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2015 EP 15152508**

(43) Veröffentlichungstag der Anmeldung:
**13.09.2017 Patentblatt 2017/37**

(73) Patentinhaber: **Siemens Aktiengesellschaft**
**80333 München (DE)**

(72) Erfinder: **HUBER, Norbert**
**91056 Erlangen (DE)**

(56) Entgegenhaltungen:
**EP-A1- 1 612 916      DE-A1-102010 033 942**
**DE-A1-102012 022 421      GB-A- 334 473**

EP 3 216 115 B1

**Beschreibung**

Die Erfindung betrifft ein Verfahren zum Kühlen eines Generators unter Verwendung einer den Generator durchströmenden Kühlluft. Große Kraftwerksgeneratoren, insbesondere in Form von Turbogeneratoren, haben typischerweise einen Wirkungsgrad von 99%. Das heißt lediglich 1% der mechanischen Leistung wird nicht in elektrischen Strom, sondern in Wärme umgewandelt, die durch besondere Kühlmaßnahmen aus einem Generator abgeführt werden muss, um vorgegebene Maximaltemperaturen nicht zu überschreiten.

Im Zuge größerer Verbreitung dezentraler regenerativer Stromerzeugung werden sogenannte Phasenschieber-Generatoren benötigt, die zeitweise in einem Lastbetrieb Blindleistung in Wirkleistung umwandeln und zeitweise in einem Leerlaufbetrieb nur passiv mit einer Netz-Frequenz eines Netzes mitdrehen, an das sie angeschlossen sind.

Zur internen Kühlung bzw. Belüftung von Turbogeneratoren werden herkömmlich Axiallüfter eingesetzt, die auf einer Welle eines Turbogenerators angeordnet sind und einen Kühlluftstrom liefern. Die Verluste eines solchen Turbogenerators untergliedern sich in elektrische Verluste, insbesondere ohmsche Verluste und Wirbelstromverluste, in Luftreibungsverluste aufgrund der Drehung von Rotorkomponenten des Turbogenerators, vor allem in einem Spalt zwischen den Rotorkomponenten und Statorkomponenten des Turbogenerators, und in Luftumwälzungsverluste durch den zu erzeugenden Kühlluftvolumenstrom. Während eines Leerlaufbetriebs eines Turbogenerators reduzieren sich die elektrischen Verluste zwar um die ohmschen Verluste im Stator des Turbogenerators, Luftreibungsverluste und Luftumwälzungsverluste bleiben aber bei Turbogeneratoren mit interner Lüftung erhalten und fallen dann aufgrund des fehlenden Leistungsumsatzes stark ins Gewicht. Der zur Kühlung notwendige Luftvolumenstrom während des Leerlaufbetriebs kann deutlich kleiner ausfallen.

Die Luftreibungsverluste können abgeschätzt werden (vgl. Bohl, Elmendorf: Technische Strömungslehre) mit Beziehungen der Form

$$\dot{Q} = C_M * {}^\rho\!/_2 * \omega^3 * R^5.$$

Das heißt, die Verlustleistung $\dot{Q}$ steigt mit der fünften Potenz des Radius $R$ und der dritten Potenz der Winkelgeschwindigkeit $\omega$ an und ist proportional zur Luftdichte $\rho$ des Kühlmediums, das üblicherweise Luft ist. $C_M$ ist ein Reibungsbeiwert. Die Luftumwälzungsverluste steigen ebenfalls mit der Dichte des Kühlmediums an.

Bei einer rotierenden elektrischen Maschine kann statt einer internen Belüftung eine externe Belüftung zur Kühlung verwendet werden, die unabhängig von Drehzahl oder Last der rotierenden elektrischen Maschine realisiert werden kann, jedoch zusätzliche Komponenten benötigt.

Luftgekühlte Generatoren können bis zu einer Leistungsgröße von etwa 400 MW realisiert werden, darüber dominiert die Luftreibung. Bei größeren Generatoren wird dann üblicherweise mit Wasserstoff als Kühlmedium gekühlt, was erhöhte Anforderungen an die Dichtheit eines Gehäuses eines Generators und die Sicherheit stellt. Aus der Druckschrift DE 10 2012 022421 A1 ist ein Verfahren zur Kühlung eines Generators bekannt, wobei der Kühlgasdruck zur Verringerung von Reibungsverlusten bei geringer Generatorlast abgesenkt wird.

Aufgabe der Erfindung ist es, die Effizienz von Generatoren, insbesondere Phasenschieber-Generatoren, zu erhöhen.

Nach dem erfindungsgemäßen Verfahren zum Kühlen eines Generators unter Verwendung einer den Generator durchströmenden Kühlluft wird eine Dichte der Kühlluft in einem Leerlaufbetrieb des Generators, in dem der Generator passiv mit einer Netz-Frequenz eines Netzes mitdreht, an das der Generator angeschlossen ist, zumindest zeitweise gegenüber einer Dichte der Kühlluft in einem Lastbetrieb des Generators reduziert.

Erfindungsgemäß können zumindest zeitweise während eines Leerlaufbetriebs des Generators, wenn also eine geringere Wärmeabfuhr notwendig ist, die Luftreibungsverluste durch eine geringere Dichte der Kühlluft reduziert werden. Dadurch kann im Leerlaufbetrieb ein geringerer Leistungsbedarf realisiert und die Kühlung gewährleistet werden, ohne zusätzliche Komponenten, wie beispielsweise externe Lüfter, zu benötigen. Dies ist insbesondere bei einem höheren zeitlichen Anteil von Leerlaufphasen mit einer deutlichen Erhöhung der Gesamteffizienz des Generators verbunden.

Die Dichte der Kühlluft kann auch während des gesamten Leerlaufbetriebs entsprechend gegenüber der Dichte der Kühlluft in einem Lastbetrieb des Generators reduziert werden.

Die Dichte der Kühlluft wird in dem Leerlaufbetrieb durch eine Erhöhung einer Luftfeuchte der Kühlluft reduziert. Bei der Verwendung von Kühlluft kann wegen der geringeren molaren Masse von Wasser die Dichte der Kühlluft reduziert werden, wobei die Kühlluft mit dem Wasser befeuchtet wird. Im Lastbetrieb des Generators ist eine solche Erhöhung der Luftfeuchtigkeit der Kühlluft wegen einer einzuhaltenden Durchschlagfestigkeit nicht möglich.

Die Dichte der Kühlluft in dem Leerlaufbetrieb wird durch ein zumindest teilweises Ersetzen der Kühlluft durch Stickstoff reduziert. Reiner Stickstoff weist eine geringere Dichte als Luft auf. Je mehr Luft durch Stickstoff ersetzt wird, desto geringer ist die Dichte der gebildeten Kühlluft. Bei dieser Ausgestaltung muss der Generator mit einem geschlossenen Kreislauf gekühlt werden, in dem die Kühlluft zirkuliert. Ein Gehäuse des Generators muss hierzu abgedichtet werden. Es kann eine Dosiereinrichtung zum Zumischen des Stickstoffs vorhanden sein, mit der auch eine Nachdosierung von Stickstoff erfolgen kann. Die mit Stickstoff zumindest teilweise angereicherte Kühlluft kann auch zur Kühlung während eines folgenden Lastbetriebs des Generators verwendet werden, um auch im Lastbetrieb Luftreibungsverluste zu reduzieren.

Die Dichte der Kühlluft in dem Leerlaufbetrieb durch ein teilweises Ersetzen der Kühlluft durch Wasserstoff unterhalb einer unteren Zündgrenze reduziert. Hierdurch kann im Leerlaufbetrieb, aber auch in einem folgenden Lastbetrieb des Generators, eine Kühlung des Generators unter geringerer Luftreibung erfolgen. Zudem sind keine aufwändigen Dichtungs- und Sicherheitsmaßnahmen erforderlich, da die untere Zündgrenze nicht erreicht wird.

Die Dichte der Kühlluft in dem Leerlaufbetrieb wird bevorzugt durch eine Erhöhung einer Rückkühltemperatur reduziert, die zum Rückkühlen der Kühlluft verwendet wird. Hiernach wird im Leerlaufbetrieb des Generators statt der im Lastbetrieb des Generators notwendigen Rückkühltemperatur eine demgegenüber erhöhte Rückkühltemperatur verwendet, was mit einer Verringerung der Temperatur der Kühlluft und dadurch mit einer geringeren Dichte der Kühlluft einhergeht. Die Erhöhung der Rückkühltemperatur kann beispielsweise durch eine höhere Strömungsgeschwindigkeit eines Kühlfluids in einem Rückkühlkreislauf oder eine sonstige Maßnahme zu dessen Leistungssteigerung bewirkt werden.

Die Dichte der Kühlluft in dem Leerlaufbetrieb wird bevorzugt durch ein Herstellen eines Unterdrucks innerhalb eines Gehäuses des Generators reduziert. Hierdurch können Luftreibungsverluste im Leerlaufbetrieb, aber auch in einem folgenden Lastbetrieb des Generators, reduziert werden. Jedoch wird hierdurch eine Wärmeabfuhrkapazität der Kühlluft herabgesetzt.

Die vorstehend beschriebenen Ausgestaltungen des Verfahrens können einzeln oder in einer beliebigen Kombination bzw. Unterkombination miteinander zur Reduzierung der Dichte der Kühlluft eingesetzt werden.

## Patentansprüche

1. Verfahren zum Kühlen eines Generators unter Verwendung einer den Generator durchströmenden Kühlluft,
   wobei eine Dichte der Kühlluft in einem Leerlaufbetrieb des Generators, in dem der Generator passiv mit einer Netz-Frequenz eines Netzes mitdreht, an das der Generator angeschlossen ist, gegenüber einer Dichte der Kühlluft in einem Lastbetrieb des Generators reduziert wird;
   **dadurch gekennzeichnet, dass** die Dichte der Kühlluft in dem Leerlaufbetrieb durch eine Erhöhung einer Luftfeuchte der Kühlluft reduziert wird, wobei die Dichte der Kühlluft in dem Leerlaufbetrieb durch ein zumindest teilweises Ersetzen der Kühlluft durch Stickstoff reduziert wird;
   wobei die Dichte der Kühlluft in dem Leerlaufbetrieb durch ein teilweises Ersetzen der Kühlluft durch Wasserstoff unterhalb einer unteren Zündgrenze reduziert wird.

2. Verfahren gemäß Anspruch 1,
   wobei die Dichte der Kühlluft in dem Leerlaufbetrieb durch eine Erhöhung einer Rückkühltemperatur reduziert wird, die zum Rückkühlen der Kühlluft verwendet wird.

3. Verfahren gemäß einem der Ansprüche 1 oder 2,
   wobei die Dichte der Kühlluft in dem Leerlaufbetrieb durch ein Herstellen eines Unterdrucks innerhalb eines Gehäuses des Generators reduziert wird.

## Claims

1. Method for cooling a generator using cooling air flowing through the generator, wherein the density of the cooling air in idle mode of the generator, in which the generator rotates passively at a grid frequency of a grid to which the generator is connected, is reduced relative to the density of the cooling air in load mode of the generator; **characterized in that** the density of the cooling air in idle mode is reduced by increasing the moisture of the cooling air, wherein the density of the cooling air in idle mode is reduced by at least partially replacing the cooling air with nitrogen; wherein the density of the cooling air in idle mode is reduced by at least partially replacing the cooling air with hydrogen below a lower ignition threshold.

2. Method according to Claim 1, wherein the density of the cooling air in idle mode is reduced by increasing the recooling temperature which is used to recool the cooling air.

3. Method according to one of Claims 1 or 2, wherein the density of the cooling air in idle mode is reduced by creating a reduced pressure inside a housing of the generator.

## Revendications

1. Procédé de refroidissement d'une génératrice à l'aide d'un air de refroidissement parcourant la génératrice,
   dans lequel une densité de l'air de refroidissement au cours d'un fonctionnement au ralenti de la génératrice, au cours duquel la génératrice tourne de manière passive à une fréquence de réseau d'un réseau auquel est raccordée la génératrice, est réduite par rapport à une densité de l'air de refroidissement au cours d'un fonctionnement en charge de la génératrice ;

**caractérisé en ce que** la densité de l'air de refroidissement au cours du fonctionnement au ralenti est réduite grâce à une augmentation d'une hygrométrie de l'air de refroidissement,

dans lequel la densité de l'air de refroidissement au cours du fonctionnement au ralenti est réduite grâce à un remplacement au moins partiel de l'air de refroidissement par de l'azote ;

dans lequel la densité de l'air de refroidissement au cours du fonctionnement au ralenti est réduite grâce à un remplacement partiel de l'air de refroidissement par de l'hydrogène en restant en dessous d'une limite d'inflammabilité inférieure.

2. Procédé selon la revendication 1,
dans lequel la densité de l'air de refroidissement au cours du fonctionnement au ralenti est réduite grâce à une augmentation d'une température de refroidissement en circuit fermé qui est utilisée pour le refroidissement en circuit fermé de l'air de refroidissement.

3. Procédé selon la revendication 1 ou 2,
dans lequel la densité de l'air de refroidissement au cours du fonctionnement au ralenti est réduite grâce à une production d'une pression négative à l'intérieur d'un carter de la génératrice.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012022421 A1